# EUROPEAN PATENT SPECIFICATION

(11) **EP 3 173 250 B1**
(45) Date of publication and mention of the grant of the patent: **18.12.2019**
(21) Application number: 16002146.5
(22) Date of filing: 05.10.2016
(51) Int. Cl.: B60B 39/06, B60B 39/10, B60B 39/02

(54) **A DEVICE FOR CONTROLLED GRIT SPREADING IN EMERGENCY ON ICY ROAD**
VORRICHTUNG ZUM KONTROLLIERTEN VERTEILEN VON STREUGUT AUF VEREISTEN STRASSEN IN EINER NOTSITUATION
DISPOSITIF DE DISPERSION CONTRÔLÉE DE SABLE GROS SUR ROUTE VERGLACÉE EN CAS D'URGENCE

(30) Priority: 29.10.2015 CZ 20150762
(43) Date of publication of application: 31.05.2017
(73) Proprietor: Kroupa, Augustin, 270 33 Jesenice (CZ)
(72) Inventor: Kroupa, Augustin, 270 33 Jesenice (CZ)
(74) Representative: Sedlák, Jirí

(56) References cited:
- WO-A1-96/20094
- DE-C- 809 033
- DE-U1- 8 716 464
- FR-A- 1 515 250
- JP-A- H04 108 559
- JP-A- H07 233 824
- JP-A- 2003 311 206
- KR-A- 20010 017 059
- US-A- 491 161
- US-A- 4 316 625

## Description

### Field of the invention

The invention describes device that makes it possible for a driver in an emergency situation on an icy road to activate controlled grit spreading and thus, although only for a limited period of time, to increase friction between tires and the road.

### Background of the invention

Despite continuing progress in the design of motor vehicles, including various recently developed anti-blocking, anti-skid and similar systems, icy roads still remain a dangerous cause of many accidents. An icy road often surprises drivers quite suddenly and unexpectedly. Road maintenance services often fail to treat all road sections in calamity situations and therefore some parts of the road may be dangerous at certain periods of time. Particularly drivers who need to travel round the clock, such as drivers of ambulances, police cars, public transportation vehicles etc., are therefore very often exposed to a higher risk of accident. In spite of efforts to improve the situation the problem has not been successfully resolved by now. Meanwhile, the problem is getting ever more urgent due to the continually growing traffic density and the changing character of traffic. Many patents have been published worldwide to address this issue. The weakness of many such proposed solutions was their complexity and therefore also expensiveness and for many such systems it is difficult to resume operation once they were activated. The background of the invention can be summarized to the effect that none of the technical solutions known by now has been embraced by car or bus manufacturers and put into practice successfully.

A device for controlled grit spreading is known from JP H07 233824 A. The device under the proposed invention is supposed to provide drivers with an opportunity to prevent loss of control of a vehicle in an emergency situation and thus to avoid an accident or at least to mitigate its consequences.

### Summary of the invention

The substance of the invention is the design of device for controlled emergency grit spreading on icy road. The device consists of a bin with grit material, two working cylinders and a driving unit. At the outlet of the grit bin there are two tightly adjoining cylinders with a layer of pliable flexible material, e.g. plastic foam. When the cylinders are at rest they are closing the outlet opening. At least one of the cylinders is linked with the driving unit, e.g. electric motor. After starting the driving unit the grit material is drawn between the cylinders and after it passes through it falls into a chute directed in front of the front wheels of the vehicle. In order to disintegrate the grit compacted by vibration and as a prevention against formation of a "vault" the bin can be provided inside with at least one disintegration punch with projections and its slow rotating movement in both directions is derived from a cam situated on a coupling between the driving unit and the driven working cylinder. The vehicle is provided with two such described pieces of device, one in front of the right front wheel and one in front of the left front wheel.

The intensity of grit spreading is proportionate to the rotating speed of the cylinders. The intensity of grit spreading can be thus regulated by controlling revolutions of the driving unit. Grit spreading can be stopped at any time and resumed again. After using a part of the grit material it can be replenished at any time.

The standard and cost-effective version of the invention is a driving unit with two revolution speeds. In this case there are two working regimes available:
a) intense grit spreading until the bin is empty (emergency situation)
b) moderate controlled grit spreading on as-needed basis

The working regime a) in case of risk on icy road is preselected by the driver using one of the following options:
1) manual regime. In that case the control relay of the driving unit is in parallel connected to the horn power supply. Pressing of the horn (using the unique availability of this control element) launches intense grit spreading and, at the same time, alerts the others about the critical situation.
2) automatic regime. In this case the regime 1) remains functional and, additionally, the device is activated automatically based on a command given by the control unit connected to ABS sensors. The working regime b) is controlled manually by the driver.

A more costly variant of the device is a driving unit with a continuous regulation of revolutions. This makes it possible in the working regime
a) to adapt revolutions of the cylinders, and thus also intensity of grit spreading, to the immediate speed of the vehicle. In that case the grit is spread on the road evenly.

The advantage of the described device for controlled grit spreading on icy road in emergency is its simplicity and the related low acquisition costs and, particularly, user comfort and low operating costs.

### Explanation of drawings

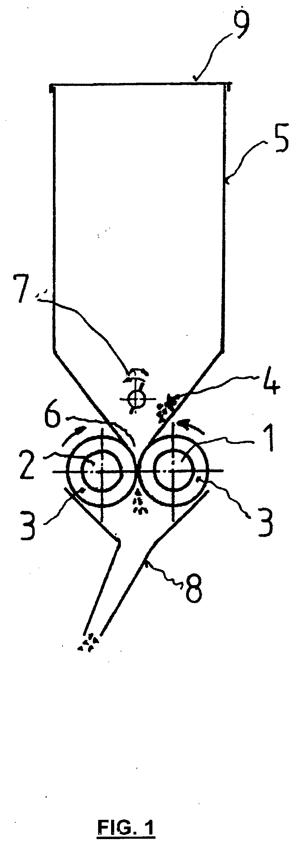

An example of embodiment of the proposed solution is described with reference to a drawing which represents a schematic cross section of the device. The driving unit is not shown in the drawing.

### Example of the embodiment of the invention

An example of embodiment of the device for controlled grit spreading on icy road in emergency can be installed in a vehicle so that after activation of the device the grit falls in front of the front wheels of the vehicle. Two pieces of device are situated in front of the front axle of the vehicle, one in front of each of the front wheels. The device consists of a bin **5** for grit material **4** which is provided with an outlet opening **6** at the bottom. Adjoining on the outlet opening **6** of the bin **5** there is a driven working cylinder **1** and a working cylinder **2.** The driving unit and the driving working cylinder **1** are not shown in the drawing. Both the working cylinders **1** and **2** are covered with a layer of pliable flexible material **3.** In this case the material is plastic foam. The driven working cylinder **1** and the working cylinder **2** are tightly pressing on each other and thus they create a friction gear. A chute **8** streamlines the grit flow **4** in front of the front wheel of the vehicle. A disintegration punch **7** provided with projections is set into slow rotating motion in both directions by a lever and a cam that are not shown in the drawing. The bin **5** filled with grit material **4** is enclosed with a lid **9.** When the driving unit is switched off the device is on standby. The device is activated by switching on of the driving unit.

The device is designed for grit material **4** represented by crushed gravel fractions 2-5 or 4 - 8. It is also possible to distribute grit material **4** with pumping stations using dosing adapted to the volume of the bin **5** with grit material **4.**

### Overview of the positions used in the drawings

- 1 -: driven working cylinder
- 2 -: working cylinder
- 3 -: pliable flexible material (e.g. plastic foam)
- 4 -: grit material
- 5-: grit bin
- 6-: outlet opening
- 7 -: disintegration punch
- 8 -: chute
- 9 -: lid

## Claims

1. A device for controlled emergency grit spreading on road which consists of a bin (5) with grit material (4), with an outlet opening (6) at the bottom end, and wherein at the outlet opening (6) of the bin (5) with grit material (4) there are two adjoining working cylinders (1, 2) with at least one of the cylinders being driven by a driving unit, **characterised in that** the working cylinders (1, 2) are pressing on each other and are provided with a layer of pliable flexible material (3).

2. A device for emergency grit spreading on road under the claim 1 **characterized in that** that the bin (5) with grit material (4) is provided with at least one disintegration punch (7) driven by a driving unit.

## Patentansprüche

1. Anlage für gesteuerte Notbestreuung der Strasse mit Streugut, bestehend aus einem Behälter (5) mit Streugut (4), der am unteren Ende mit einer Ausgangsöffnung (6) versehen ist, wobei sich in der Ausgangsöffnung (6) des Behälters (5) mit dem Streugut (4) zwei benachbarte Rollen (1,2) befinden, wo wenigstens eine dieser Rollen von einer Antriebseinheit angetrieben ist, **dadurch gekennzeichnet, dass** die Arbeitsrollen (1,2) gegeneinander gedrückt und mit einer Schicht aus elastischem und flexiblen Material (3) versehen sind.

2. Anlage für gesteuerte Notbestreuung der Strasse nach Anspruch 1, **dadurch gekennzeichnet, dass** der Behälter (5) mit dem Streugut (4) mit wenigstens einem, von der Antriebseinheit angetriebenem Brechkopf (7) ausgerüstet ist.

## Revendications

1. Dispositif de gravillonnage d'urgence contrôlé de la route, y compris un conteneur (5) avec le matériel de gravillonnage (4), muni à son extrémité inférieure d'une ouverture de sortie (6), alors que dans l'ouverture de sortie (6) du conteneur (5) avec le matériel de gravillonnage (4) se trouvent deux rouleaux de travail adjacents (1, 2), l'un au moins des rouleaux étant entraîné par une unité d'entraînement, **caractérisé en ce que** les rouleaux de travail (1, 2) sont pressés l'un contre l'autre et munis d'une couche de matériau souple et flexible (3).

2. Dispositif de gravillonnage d'urgence contrôlé de la route selon la revendication 1, **caractérisée en ce que** le conteneur (5) avec le matériel de gravillonnage (4) est pourvu d'au moins une tête écrasante (7) entraînée par une unité d'entraînement.
